# EUROPEAN PATENT APPLICATION

(11) **EP 2 868 184 A1**
(43) Date of publication of application: **06.05.2015**
(21) Application number: 14188433.8
(22) Date of filing: 10.10.2014
(51) Int. Cl.: A01D 34/64, A01B 63/104, A01D 34/66

(54) **Lifting link mechanism**

(30) Priority: 18.10.2013 US 201361892575 P; 30.06.2014 US 201414319942
(71) Applicant: Yanmar Co., Ltd., Osaka-shi, Osaka 530-8311 (JP)
(72) Inventor: Iida, Tetsuya, Osaka-shi, Osaka 530-8311 (JP); Kan, Masato, Osaka-shi,, Osaka 530-8311 (JP); Goto, Takashi, Osaka-shi,, Osaka 530-8311 (JP)
(74) Representative: Jostarndt, Hans-Dieter

(57) **Abstract**

For providing a lift linkage with easy mounting operation, this invention provides a lifting link mechanism 7 which lifts a mower deck 6 comprising: a front bracket 71 attached to a front portion of the mower deck 6, a front link 72 coupled to the front bracket 71, a rear bracket 73 attached to a rear portion of the mower deck 6, and a rear link 74 coupled to the rear bracket 73, wherein a protrusion formed in the rear link 74 is fit into a notch portion of the rear bracket 73 and at least the rear link 74 is coupled in a rotatable manner about the protrusion.

## Description

### [Technical Field]

This invention relates a lifting link mechanism.

### [Back ground of the invention]

Conventionally, the tractor having a mower deck is known. Such a tractor has a lifting linkage and vertically movably mower deck. Usual lifting linkages have been designed to suspend the mower deck with the rear link and the front link (for example, see PTL 1).

By the way, the front and the rear link are pivotally connected to the bracket of the mower deck. To be more specific, the front link is connected rotatably around the pin by a pin inserted into the shaft holes in the condition matching the shaft hole of the bracket and the shaft hole of the front link. Similarly, the rear link is connected rotatably around the pin by a pin inserted into the shaft holes in the condition matching the shaft hole of the bracket and the shaft hole of the rear link. Therefore, the lifting linkage has a problem that it is impossible to insert the pin when the shaft holes to be matched are not matched even slightly. That is, such a lift linkage has a problem that mounting operation of the mower deck is difficult.

### [Citation List]

### [Patent Literature]

[PTL 1] JP 2006-149335 A

### [Summary of Invention]

### [Technical Problem]

The present invention aims at providing a lift linkage with easy mounting operation.

### [Solution to Problem]

The problem to be solved by the present invention is as described above and the following describes the means for solving this problem.

The invention of the claim 1 is
a lifting link mechanism liftable a mower deck comprising:
a front bracket attached to a front portion of the mower deck,
a front link coupled to the front bracket,
a rear bracket attached to a rear portion of the mower deck, and
a rear link coupled to the rear bracket,
wherein a protrusion formed in the rear link is fit into a notch portion of the rear bracket and at least the rear link is coupled in a rotatable manner about the protrusion.

The invention of the claim 2 is
the lifting link mechanism according to claim 1, wherein:
the protrusion is in parallel with the left and right direction,
the notch portion is formed to be parallel or approximately parallel with the front and rear direction, and
the rear link is coupled in a rotatable manner about the protrusion.

The invention of the claim 3 is
the lifting link mechanism according to claim 2, wherein:
the rear link is a plate member has the protrusions formed on each of the left and right surfaces,
the rear bracket is composed with two plate members which is formed the notch portion and is arranged in parallel with one another, and
the rear link is inserted between the two plate members of the rear bracket with the left and the right protrusions fit along the left and the right notches and is coupled in a rotatable manner about the protrusion.

The invention of the claim 4 is
the lifting link mechanism according to any one of claims 1 to 3, further comprising:
a front wheel bracket attached to the front portion of the mower deck, and
a rear wheel bracket attached to the rear portion of the mower deck,
wherein the front and the rear wheel brackets are integrated by rib disposed on the upper side of the mower deck.

### [Advantageous Effects of Invention]

According to the invention of the claim 1, the protrusion formed in the rear link is fit into the notch portion of the rear bracket and at least the rear link is coupled in a rotatable manner about the protrusion. Thus process inserting the pin with the state matching the holes is omitted.

According to the invention of the claim 2, the rear link is coupled in a rotatable manner about the protrusion along with the notch portion. Thus the mower mounting operation is easy because the rear link and the rear bracket are coupled suitably by moving the mower deck in front - back direction.

According to the invention of the claim 3, the rear link is inserted between the two plate members of the rear bracket with the left and the right protrusions fit along the left and the right notches and is coupled in a rotatable manner about the protrusion. Thus the mower mounting operation is easier because the mower deck is mounted suitably without being off to the left and right.

According to the invention of the claim 4, the front and the rear wheel brackets are integrated by rib disposed on the upper side of the mower deck. Thus operation for the assembling the mower deck is easy.

### BRIEF DESCRIPTION OF THE DRAWINGS

FIG. 1 is a diagram showing a tractor.
FIG. 2 is a diagram showing a mower deck and a lifting link mechanism of the same.
FIG. 3 is a view in a direction of an arrow Fa shown in FIG. 2.
FIG. 4A and 4B are diagrams showing operation modes of the lifting link.
FIG. 5 is an enlarged view of a region R shown in FIG. 2.
FIG. 6 is a view in a direction of an arrow Fb shown in FIG. 5.
FIG. 7 is a view in a direction of an arrow Fc shown in FIG. 5.

### DETAILED DESCRIPTION OF THE INVENTION

First, a tractor 100 is briefly described.

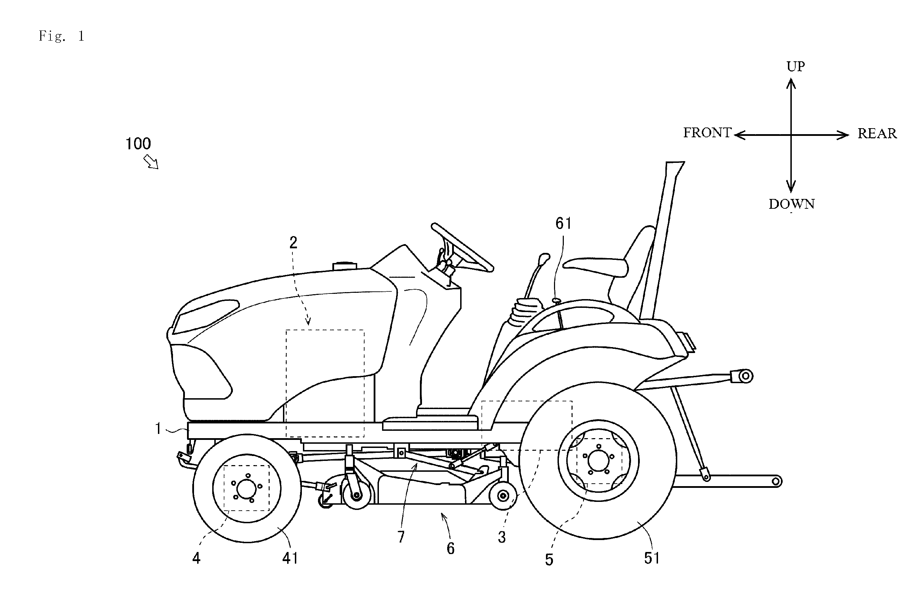

FIG. 1 shows the tractor 100. In the figure, the front and rear direction and the upper and lower direction of the tractor 100 are indicated.

The tractor 100 mainly includes a frame 1, an engine 2, a transmission 3, a front axle 4, and a rear axle 5. The tractor 100 further includes a mower deck 6.

The frame 1 serves as the main structure for the tractor 100. The engine 2 and the like described below are attached to the frame 1.

The engine 2 converts energy obtained by burning a fuel into rotational movement. When an operator operates an acceleration lever, the engine 2 changes the driving state in accordance with the operation. The engine 2 maintains the rotational speed at a constant level even when the load changes.

The transmission 3 switches between forward and backward movement of the tractor 100 and shifts the speed of the tractor 100. When the operator operates a shift lever, the operation state of the transmission 3 changes in accordance with the operation. The transmission 3 includes a hydromechanical continuously variable transmission (HMT or I-HMT) as a transmission device.

The front axle 4 transmits the rotational energy from the engine 2 to front tires 41. The rotational energy from the engine 2 is input to the front axle 4 through the transmission 3. The front axle 4 is disposed next to a steering device. When the operator operates a handle, the steering device changes a steering angle of the front tires 41 in accordance with the operation.

The rear axle 5 transmits the rotational energy from the engine 2 to rear tires 51. The rotational energy from the engine 2 is input to the rear axle 5 through the transmission 3. The rear axle 5 is provided with a PTO output mechanism. The PTO output mechanism inputs the rotational energy to an implement, which is the mower deck 6 in the tractor 100.

The mower deck 6 rotates a blade to perform lawn mowing and the like. The rotational energy from the engine 2 is input to the mower deck 6 through the PTO output mechanism. The mower deck 6 is suspended by a lifting link mechanism 7. When the operator operates a lever 61, the lifting link mechanism 7 raises and lowers the mower deck 6 in accordance with the operation.

Next, the lifting link mechanism 7 is described in detail.

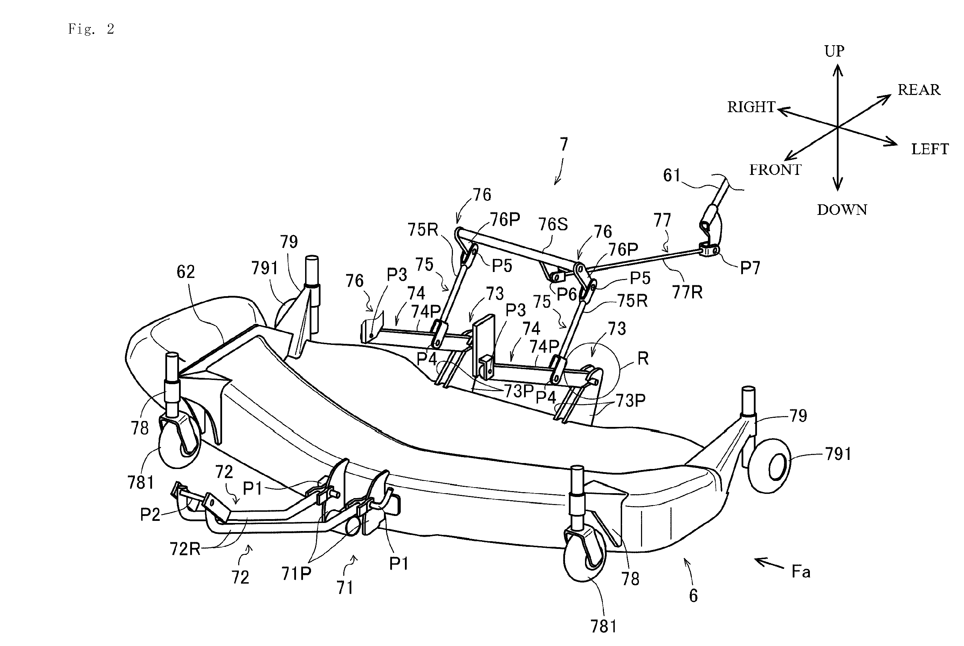

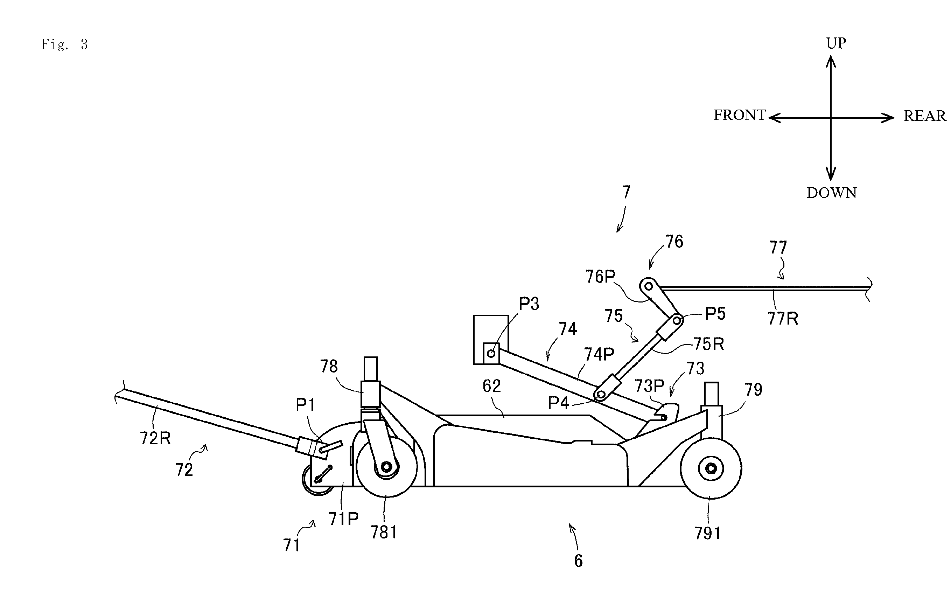

FIG. 2 shows the mower deck 6 and the lifting link mechanism 7 of the same. FIG. 3 is a view in the direction of an arrow Fa shown in FIG. 2. In the figure, the front and rear direction, the left and right direction, and the upper and lower direction of the tractor 100 are indicated.

The lifting link mechanism 7 mainly includes a front bracket 71, front links 72, rear brackets 73, and rear links 74. The lifting link mechanism 7 according to the embodiment of the present invention further includes control links 75, control arms 76, and a control rod 77. The components are described in detail below.

The lifting link mechanism 7 includes a single front bracket 71 mainly including two plate members 71P. One plate member 71P is arranged in parallel with the other plate member 71P and has a rear end portion welded on a front portion of the mower deck 6. Thus, the front bracket 71 is attached on the front portion of the mower deck 6. The two plate members 71P forming the front bracket 71 have a shaft hole at the same position. A pin P1 is inserted in the shaft hole.

The lifting link mechanism 7 includes two front links 72. Each front link 72 mainly includes a single rod member 72R. One rod member 72R is arranged in parallel with the other rod member 72R, and has one end portion coupled to the plate member 71P. Thus, the front link 72 is coupled to the front bracket 71. Specifically, the front link 72 is coupled to the front bracket 71, while being rotatable about the pin P1, with a shaft hole formed in a clevis of the front link 72 overlapping the shaft hole of the front bracket 71, and the pin P1 being inserted in the shaft holes. The other end portion of the front link 72 is supported by a pin P2 in a rotatable manner. The pin P2 is inserted into a bracket attached to the frame 1.

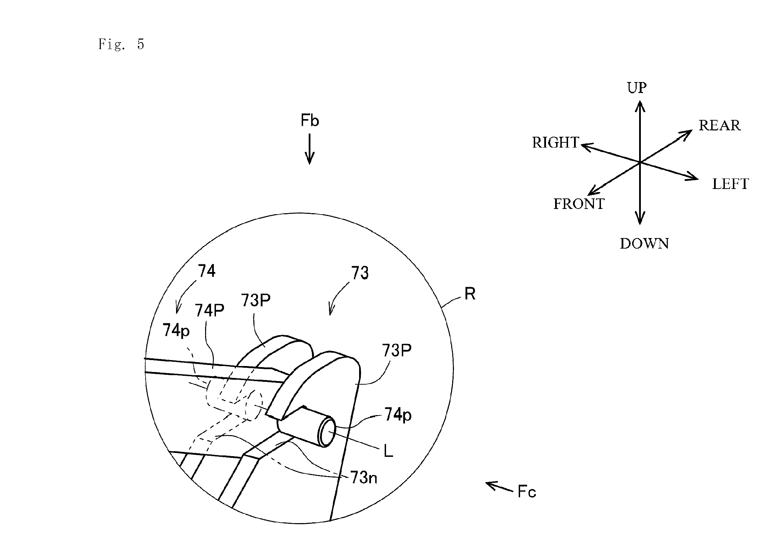

The lifting link mechanism 7 includes two rear brackets 73 each mainly including two plate members 73P. One plate member 73P is arranged in parallel with the other plate member 73P, and has a front end portion welded to a rear portion of the mower deck 6. Thus, the rear bracket 73 is attached to the rear portion of the mower deck 6. The two plate members 73P forming the rear bracket 73 have a notch 73n at the same position (see FIGs. 5, 6, and 7). A protrusion 74p formed in the rear link 74 is fit into the notch portion 73n (see FIGs. 5, 6, and 7).

The lifting link mechanism 7 includes two rear links 74 each mainly including a single plate member 74P. One plate member 74P is arranged in parallel with the other plate member 74P, and has one end coupled to the plate member 73P. Thus, the rear link 74 is coupled to the rear bracket 73. Specifically, the rear link 74 is coupled to the rear bracket 73 with the protrusion 74p formed in the rear link 74 fit in the notch portion 73n of the rear bracket 73. Thus, the rear link 74 is rotatable about the protrusion 74p (see FIGs. 5, 6, and 7). The rear link 74 has the other end supported by a pin P3 in a rotatable manner. The pin P3 is inserted into the bracket attached to the frame 1.

The lifting link mechanism 7 includes two control links 75. Each control link 75 mainly includes a single rod member 75R. One rod member 75R is arranged in parallel with the other rod member 75R, and has one end portion coupled to the plate member 74P. Thus, the control link 75 is coupled to the rear link 74. Specifically, the control link 75 is supported to the rear link 74, while being rotatable about a pin P4, with a shaft hole formed in a clevis of the control link 75 overlapping the shaft hole of the rear link 74, and the pin P4 being inserted in the shaft holes. The other end of the control link 75 is supported by a pin P5 in a rotatable manner. The pin P5 is inserted into the control arm 76 fixed on a center rod 76S.

The lifting link mechanism 7 includes two control arms 76 each mainly including a single plate member 76P. One plate member 76P is arranged in parallel with the other plate member 76P, and has one end portion coupled to the rod member 75R. Thus, the control arm 76 is coupled to the control link 75. Specifically, the control arm 76 is coupled to the control link 75, while being rotatable about the pin P5, with a shaft hole thereof overlapping the shaft hole of the control link 75, and the pin P5 being inserted in the shaft holes. The other end of the control arm 76 is fixed to the center rod 76S supported in a rotatable manner on the bracket attached to the frame 1.

The lifting link mechanism 7 includes a single control rod 77 mainly including a single rod member 77R. The rod member 77R extends approximately in parallel with the front and rear direction, and has one end portion coupled to the center rod 76S. Thus, the control rod 77 is coupled to the center rod 76S (coupled to the control arm 76 through the center rod 76S). Specifically, the control rod 77 is coupled to the center rod 76S, while being rotatable about a pin P6, with a shaft hole formed in a clevis of the control rod 77 overlapping a shaft hole of the center rod 76S, and the pin P6 being inserted in the shaft holes. The other end of the control rod 77 is supported by a pin P7 in a rotatable manner. The pin P7 is inserted into a bracket supporting the lever 61.

Specific operation modes of the lifting link mechanism 7 are described below in detail.

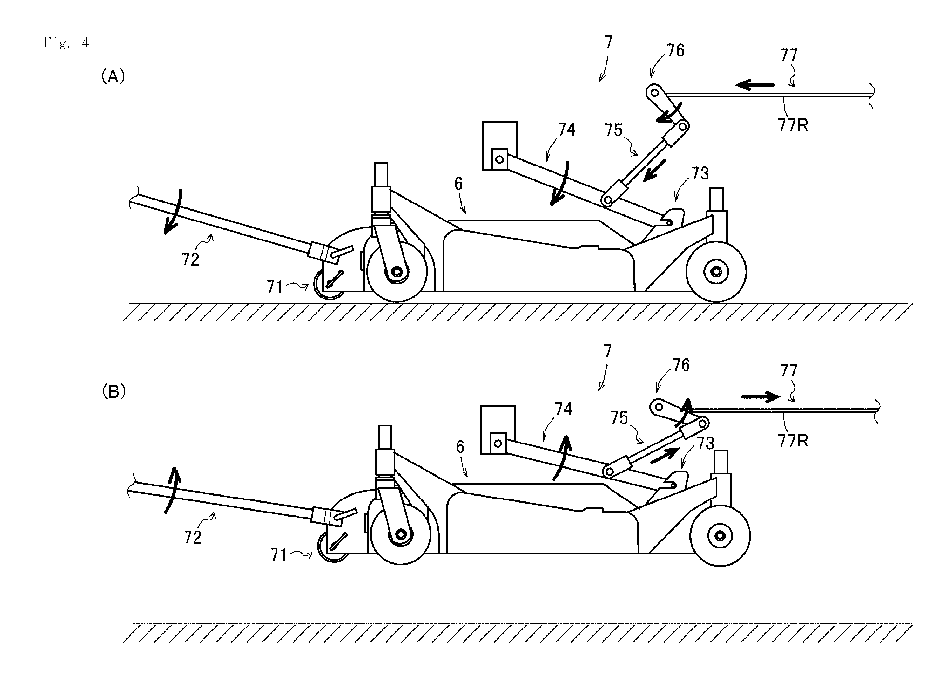

FIG. 4A shows a state where the mower deck 6 is lowered. FIG. 4B shows a state where the mower deck 6 is raised. Arrows in the figures indicate the operation directions of the components.

The operator performs an operation to lower the mower deck 6 before performing the lawn mowing and the like. The operation mode in a case where the mower deck 6 is lowered is described below by referring to FIG. 4A.

First, the operator pulls up the lever 61. Thus, the control rod 77 is pushed forward and rotates the center rod 76S. Thus, the control arm 76 fixed on the center rod 76S is also rotated, so that the control link 75 is pushed down. Here, the control link 75 rotates the rear link 74 downward. Thus, the mower deck 6 is lowered to a predetermined position. The front link 72 is rotated downward by the rotation of the rear link 74. Therefore, the mower deck 6 is lowered while being in parallel with the ground.

After performing the lawn mowing and the like, the operator performs an operation of raising the mower deck 6. The operation mode in a case where the mower deck 6 is raised is descried below by referring to FIG. 4B.

First, the operator pushes down the lever 61. Thus, the control rod 77 is pulled backward to rotate the center rod 76S. Thus, the control arm 76 fixed to the center rod 76S is also rotated, so that the control link 75 is pulled upward. Here, the control link 75 rotates the rear link 74 upward. Thus, the mower deck 6 is raised to a predetermined position. The front link 72 is rotated upward by the rotation of the rear link 74. Thus, the mower deck 6 is raised while being in parallel with the ground.

Next, a feature of the lifting link mechanism 7 and its effect will be described.

The main feature of the lifting link mechanism 7 is that the protrusion 74p is disposed on the rear link 74, the notch 73n is disposed on the rear bracket 73, and the rear link 74 and the rear bracket 73 are coupled with one another through the protrusion 74p and the notch 73n (see FIGs. 5, 6, and 7). Specifically, the protrusion 74p disposed on the rear link 74 is fit in the notch 73n disposed on the rear bracket 73 to be engaged therewith, and the coupling is achieved.

In such a structure, the rear link 74 is coupled, while being rotatable about the protrusion 74p, with the protrusion 74p disposed on the rear link 74 fit in the notch 73n of the rear bracket 73. Thus, a step of inserting a pin in overlapping shaft holes is not required, whereby attachment of the mower deck 6 is facilitated.

As described above, in the lifting link mechanism 7, the protrusion 74p is disposed on the rear link 74 and the notch 73n is disposed on the rear bracket 73, and the rear link 74 and the rear bracket 73 are coupled with one another through the protrusion 74p and the notch 73n. Alternatively, a protrusion may be disposed on the front link 72 and a notch may be disposed on a front bracket 71, and the front link 72 and the front bracket 71 may be coupled with one another through the protrusion and the notch.

Such a structure is described in detail below.

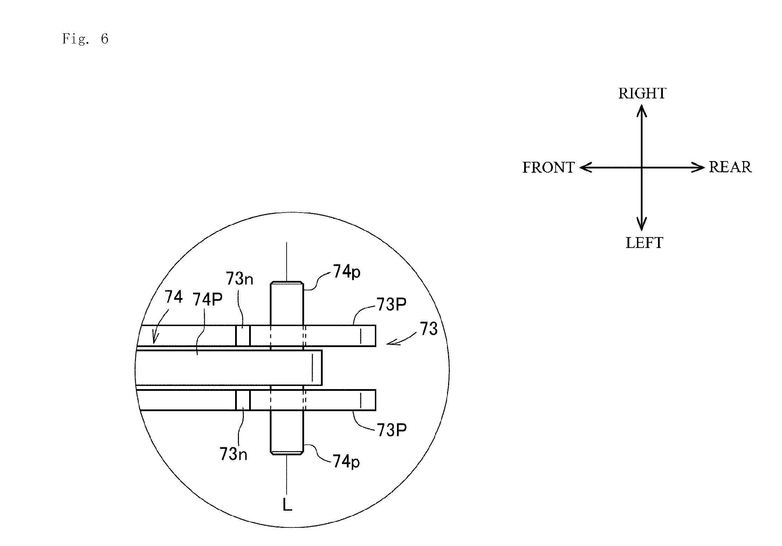

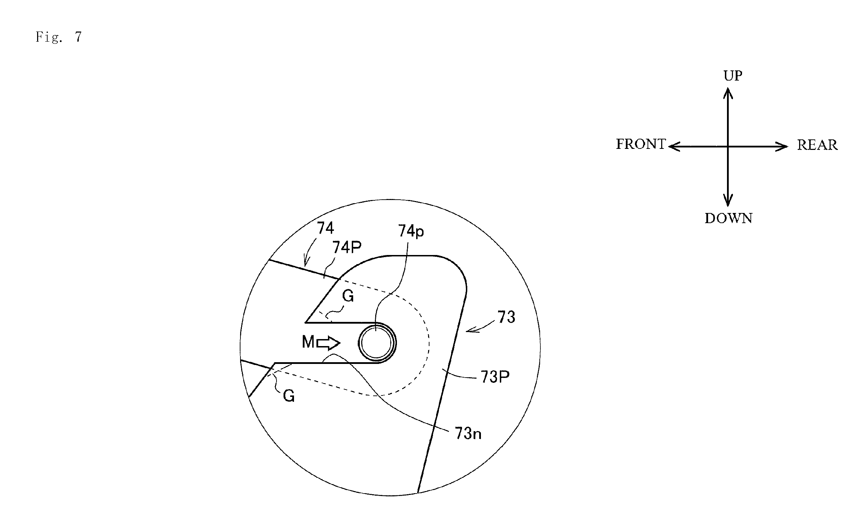

FIG. 5 is an enlarged view of a region R shown in FIG. 2. FIG. 6 is a view in a direction of an arrow Fb shown in FIG. 5. FIG. 7 is a view taken in a direction of an arrow Fc shown in FIG. 5. In the figures, the front and rear direction, the left and right direction, and the upper and lower direction of the tractor 100 are indicated.

In the lifting link mechanism 7, the protrusion 74p is formed to be parallel with the left and right direction. Specifically, the protrusion 74p is a protruding portion formed on each of the left and right surfaces of the plate member 74P. The protruding portion has the center axis L in parallel with the left and right direction. As described above, the single rear link 74 mainly includes the single plate member 74P. Thus, the rear link 74 may be regarded as a single plate member 74P having the protrusions 74p respectively disposed on the left and the right surfaces.

The notch 73n is formed to be parallel or approximately parallel with the front and rear direction. Specifically, the notch 73n is a thin gap portion formed from the front edge of the plate member 73P toward the rear. The longitudinal direction of the thin gap portion is parallel or approximately parallel with the front and rear direction. As described above, the single rear bracket 73 mainly includes the two plate members 73P. The plate members 73P are arranged in parallel with one another. Thus, the rear bracket 73 may be considered as having a configuration, in which the two plate members 73P each provided with the notch 73n are disposed in parallel with one another.

In such a structure, the rear link 74 has the protrusion 74p fit along the notch 73n (see arrow M in FIG. 7), and thus is coupled in a rotatable manner about the protrusion 74p. Thus, the rear link 74 and the rear bracket 73 are able to be appropriately coupled to one another by moving the mower deck 6 in the front and rear direction. Thus, the attachment of the mower deck 6 is even more facilitated.

Furthermore, the rear link 74 and the rear bracket 73 have the configurations described above, due to the following reason.

Specifically, the rear link 74 including the single plate member 74P is inserted into the rear bracket 73 including the two plate members 73P. Thus, the rear link 74 and the rear bracket 73 are coupled with one another in such a manner as not to be offset from one another in the left and right direction. Specifically, the plate member 74P of the rear link 74 is guided by the plate member 73P of the rear bracket 73, and thus, the rear link 74 and the rear bracket 73 are coupled with one another in such a manner as not to be offset from one another in the left and right direction.

In such a structure, the rear link 74 is inserted between the two plate members 73P of the rear bracket 73 with the left and the right protrusions 74p fit along the left and the right notches 73n. Thus, the rear link 74 is coupled while being rotatable about the protrusions 74p. Thus, the rear link 74 and the rear bracket 73 are able to be appropriately coupled with one another without being offset in the left and right direction, by moving the mower deck 6 in the front and rear direction. Thus, the attachment of the mower deck 6 is even more facilitated.

As described above, in the lifting link mechanism 7, when the rear link 74 is inserted between the two plate members 73P of the rear bracket 73, the left and the right protrusions 74p are fit along the left and the right notches 73n. The fitting of the protrusion 74p is facilitated by chamfering the front edge of the notch 73n (when the notch 73n has a chamfered like shape) (see two-dot chain line G in FIG. 7).

Next, another feature of the lifting link mechanism 7 and its effect will be described.

As shown in FIGs. 2 and 3, the lifting link mechanism 7 includes front wheel brackets 78 and rear wheel brackets 79.

The front wheel bracket 78 is a structure that supports a front wheel 781 in a rotatable manner. A rear end of the front wheel bracket 78 is welded on a front portion of the mower deck 6. Thus, the front wheel bracket 78 is attached to the front portion of the mower deck 6. The front wheel bracket 78 is reinforced by a rib 62 extending on the upper side of the mower deck 6 in the front and rear direction.

The rear wheel bracket 79 is a structure that supports a rear wheel 791 in a rotatable manner. A front end portion of the rear wheel bracket 79 is welded on a rear portion of the mower deck 6. Thus, the rear wheel bracket 79 is attached to the rear portion of the mower deck 6. The rear wheel bracket 79 is reinforced by the rib 62 extending on the upper side of the mower deck 6 in the front and rear direction.

In the lifting link mechanism 7, the rib 62 extends forward on the upper side of the mower deck 6, and is welded on an upper portion of the front wheel bracket 78. The rib 62 also extends backward on the upper side of the mower deck 6, and is welded on an upper portion of the rear wheel bracket 79. The front and rear ends of the rib 62 are respectively welded on the front wheel bracket 78 and the rear wheel bracket 79.

In such a structure, the front and the rear wheel brackets 78 and 79 are coupled with one another through the rib 62 disposed on the upper side of the mower deck 6. Thus, the front and the rear wheel brackets 78 and 79 are integrated, whereby the assembly of the mower deck 6 is facilitated.

## Claims

1. A lifting link mechanism liftable a mower deck comprising:
a front bracket attached to a front portion of the mower deck,
a front link coupled to the front bracket,
a rear bracket attached to a rear portion of the mower deck, and
a rear link coupled to the rear bracket,
wherein a protrusion formed in the rear link is fit into a notch portion of the rear bracket and at least the rear link is coupled in a rotatable manner about the protrusion.

2. The lifting link mechanism according to claim 1, wherein:
the protrusion is in parallel with the left and right direction,
the notch portion is formed to be parallel or approximately parallel with the front and rear direction, and
the rear link is coupled in a rotatable manner about the protrusion.

3. The lifting link mechanism according to claim 2, wherein:
the rear link is a plate member has the protrusions formed on each of the left and right surfaces,
the rear bracket is composed with two plate members which is formed the notch portion and is arranged in parallel with one another, and
the rear link is inserted between the two plate members of the rear bracket with the left and the right protrusions fit along the left and the right notches and is coupled in a rotatable manner about the protrusion along with the notch portion.

4. The lifting link mechanism according to any one of claims 1 to 3, further comprising:
a front wheel bracket attached to the front portion of the mower deck, and
a rear wheel bracket attached to the rear portion of the mower deck,
wherein the front and the rear wheel brackets are integrated by rib disposed on the upper side of the mower deck.
